# EUROPÄISCHE PATENTSCHRIFT

(11) **EP 3 492 704 B1**
(45) Veröffentlichungstag und Bekanntmachung des Hinweises auf die Patenterteilung: **14.10.2020**
(21) Anmeldenummer: 18205686.1
(22) Anmeldetag: 12.11.2018
(51) Int. Cl.: F01D 11/00, F01D 11/02, F16J 15/44

(54) **MODUL FÜR EINE STRÖMUNGSMASCHINE**
MODULE FOR A TURBOMACHINE
MODULE POUR UNE TURBOMACHINE

(30) Priorität: 01.12.2017 DE 102017221660
(43) Veröffentlichungstag der Anmeldung: 05.06.2019
(73) Patentinhaber: MTU Aero Engines AG, 80995 München (DE)
(72) Erfinder: Schlemmer, Markus, 84048 Mainburg / Sandelzhausen (DE)

(56) Entgegenhaltungen:
- DE-A1-102011 000 203
- DE-A1-102016 202 519
- US-A- 2 812 159
- US-A- 3 018 085
- US-A1- 2003 082 050

## Beschreibung

### Technisches Gebiet

Die vorliegende Erfindung betrifft ein Modul für eine Strömungsmaschine.

### Stand der Technik

Bei der Strömungsmaschine kann es sich bspw. um ein Strahltriebwerk handeln, z. B. um ein Mantelstromtriebwerk. Funktional gliedert sich die Strömungsmaschine in Verdichter, Brennkammer und Turbine. Etwa im Falle des Strahltriebwerks wird angesaugte Luft vom Verdichter komprimiert und in der nachgelagerten Brennkammer mit hinzugemischtem Kerosin verbrannt. Das entstehende Heißgas, eine Mischung aus Verbrennungsgas und Luft, durchströmt die nachgelagerte Turbine und wird dabei expandiert. Dabei entzieht die Turbine dem Heißgas anteilig auch Energie, um den Verdichter anzutreiben. Die Turbine und der Verdichter sind i.d.R. jeweils mehrstufig aufgebaut, wobei eine Stufe jeweils einen Leit- und einen Laufschaufelkranz aufweist. Im Falle des Verdichters ist dabei jeweils der Laufschaufelkranz dem Leitschaufelkranz nachgelagert angeordnet.

Die US 3,018,085A betrifft eine Leitschaufel mit einem radial innerhalb davon angeordneten Dichtungsträger. Dieser ist axial zwischen zwei Dichtblechen eingefasst, die zugleich die Innenplattform der Leitschaufel bilden.

Die US 2003/082050 A1 betrifft ebenfalls eine Leitschaufel mit einem radial innerhalb davon angeordneten Dichtungsträger, wobei zur Relativfixierung ein Zentrierstift eingesetzt wird.

Die DE 10 2016 202 519 A1 betrifft eine Leitschaufel, die in einer Speichenzentrierung gegenüber einem radial innerhalb angeordneten Dichtungsträger gelagert ist. Zur Anlage in Umlaufrichtung wird dabei ein Bolzen eingesetzt.

Die US 2,812,159 A betrifft eine Leitschaufel mit einem radial innerhalb angeordneten Blech, welches zugleich eine Dichtungs- und Dämpfungsfunktion übernehmen soll.

Die DE 10 2011 000 203 A1 betrifft eine Labyrinthdichtung mit mehreren unterschiedlich langen Stegen, wobei der Dichtungsträger zugleich radial vorgespannt montiert wird.

Die vorliegende Erfindung hat ein Modul mit einer Leitschaufelanordnung und einem Dichtungsträger zum Gegenstand. Zusätzlich zu der bzw. den an einer Innenplattform angeordneten Leitschaufeln weist die Leitschaufelanordnung Führungszapfen auf, die den Leitschaufeln radial entgegengesetzt innen an der Innenplattform angeordnet sind. Der bzw. die Führungszapfen bilden eine sogenannte Speichenzentrierung und greifen dazu in eine nach radial außen offene Aufnahme des Dichtungsträgers ein. In dieser Aufnahme ist ferner ein Gleitkörper angeordnet, der für den bzw. die Führungszapfen bezogen auf die Umlaufrichtung eine Anlage bildet. In der Umlaufrichtung, die sich auf einen Umlauf um die Längsachse des Moduls bzw. der Strömungsmaschine bezieht, werden über die Leitschaufeln erhebliche mechanische Kräfte übertragen und ist der Gleitkörper entsprechend beansprucht. Gegenwärtig wird deshalb ein gesonderter Gleitkörper, der dieser hohen mechanischen Beanspruchungen standhält, eingesetzt und mit einem Niet befestigt.

### Darstellung der Erfindung

Der vorliegenden Erfindung liegt das technische Problem zugrunde, ein besonders vorteilhaftes Modul für eine Strömungsmaschine anzugeben.

Dies wird erfindungsgemäß mit einem Modul gemäß Anspruch 1 gelöst, bei welchem der Gleitkörper einstückig mit einer Wand des Dichtungsträgers ausgebildet ist, welche die Aufnahme mit dem Führungszapfen darin axial begrenzt. Die einstückige Ausgestaltung ist insoweit vorteilhaft, als der Gleitkörper als integrales Teil nicht gesondert befestigt werden muss, konkret kein Vernieten erforderlich ist. Im Stand der Technik wird der Gleitkörper zwischen zwei gemeinsam die Aufnahme axial begrenzenden Wänden des Dichtungsträgers platziert und mit einem diese Wände und den Gleitkörper durchsetzenden Niet befestigt. Dabei muss der Gleitkörper etwas Untermaß haben, damit er zwischen den Wänden überhaupt in die Montageposition verschoben werden kann. Beim Nieten selbst werden die Wände vor dem Schließen des Niets axial zusammengedrückt. Der Erfinder hat nun festgestellt, dass der Niet hierdurch nach einem Entfernen des Nietwerkzeugs aufgrund des Federeffekts mit einer Vorspannung beaufschlagt wird, was schlimmstenfalls zu einem Versagen des Niets führen kann, initial bzw. über die Einsatzdauer hinweg. Diese Spaltproblematik kann mit der einstückigen Ausgestaltung gelöst werden.

Bevorzugte Ausgestaltungen finden sich in den abhängigen Ansprüchen und der gesamten Offenbarung, wobei in der Darstellung der Merkmale nicht immer im Einzelnen zwischen dem Modul, einem entsprechenden Verdichter bzw. der Strömungsmaschine unterschieden wird. Die Offenbarung ist hinsichtlich sämtlicher Kategorien zu lesen, insbesondere auch auf entsprechende Verwendungen.

Wie nachstehend im Einzelnen deutlich wird, wird die Aufnahme i.d.R. von zwei Wänden des Dichtungsträgers axial begrenzt, die in einem Axialschnitt ein U-Profil bilden. Bezogen auf die radiale Tiefe dieses U-Profils ist der Gleitkörper nach dem Stand der Technik im Wesentlichen mittig angeordnet, verbleibt also radial zwischen dem Gleitkörper und dem Profilgrund ein Freiraum. Wie auch das Ausführungsbeispiel illustriert, erstreckt sich der Gleitkörper vorliegend hingegen bevorzugt bis zum Profilgrund. Wird die Aufnahme bspw. materialabtragend, etwa durch Fräsen bzw. Stechen, von radial außen eingebracht, kann eine entsprechende Form auch zwingend sein. Ein Materialabtrag radial unterhalb des Gleitkörpers ist dann aufgrund mangelnder Zugänglichkeit mitunter gar nicht möglich. Gegenüber dem Stand der Technik mit dem Freiraum dort wird somit ein gewisser Nachteil in Kauf genommen, nämlich ein infolge des größeren Gleitkörpervolumens höheres Gewicht. Wenngleich sich dies bspw. bei einem Flugtriebwerk in einem etwas erhöhten Kerosinverbrauch niederschlagen kann, hat in einer Gesamtbetrachtung die mit dem Erfindungsgegenstand erhöhte Zuverlässigkeit mehr Bedeutung.

Generell bezieht sich im Rahmen dieser Offenbarung "axial" auf die Längsachse des Moduls, also die Längsachse des Verdichters bzw. der Strömungsmaschine. Diese Längsachse kann bspw. mit einer Rotationsachse zusammenfallen, um welche die der Leitschaufelanordnung zugeordneten Laufschaufeln im Betrieb rotieren. "Radial" betrifft die dazu senkrechten, von der Längsachse weg weisenden Radialrichtungen, und der "Umlauf" bzw. die "Umlaufrichtung" beziehen sich auf eine Drehung um die Längsachse. Bei einem "Axialschnitt" liegt die Längsachse in der Schnittebene.

Ferner sind "ein" und "eine" im Rahmen dieser Offenbarung ohne ausdrücklich gegenteilige Angabe als unbestimmte Artikel und damit immer auch als "mindestens ein" bzw. "mindestens eine" zu lesen. Die Leitschaufelanordnung kann bspw. als Mehrfachsegment vorgesehen sein, es können also radial außen an der Innenplattform auch mehrere Leitschaufeln angeordnet sein, die umlaufend aufeinander folgen. Die Leitschaufelanordnung bildet gemeinsam mit einer weiteren bzw. weiteren Leitschaufelanordnung(en), die umlaufend aufeinander folgen, die Stufe. Bevorzugt sind sämtliche Leitschaufelanordnungen der Stufe jeweils an einem einstückig mit der Wand des Dichtungsträgers ausgebildeten Gleitkörper geführt.

Der Gleitkörper und die Dichtungsträgerwand sind infolge der miteinander "einstückigen" Ausgestaltung nicht zerstörungsfrei voneinander trennbar, können also nur unter zumindest teilweiser Zerstörung des Gleitkörpers und/oder der Dichtungsträgerwand bzw. einer Verbindungsschicht dazwischen voneinander getrennt werden. Im Allgemeinen ist auch eine Einstückigkeit durch eine stoffschlüssige Verbindung des Gleitkörpers mit der Dichtungsträgerwand denkbar, insbesondere ein Verschweißen, etwa durch Reibschweißen.

In bevorzugter Ausgestaltung ist der Gleitkörper monolithisch mit der Dichtungsträgerwand ausgebildet. Die beiden werden also bspw. im selben Herstellungsprozess aneinander angeformt, bspw. bei einer Gussherstellung bzw. einem generativen Aufbauen. Der Gleitkörper und die Dichtungsträgerwand können aber auch aus einem Vollmaterial durch entsprechenden Materialabtrag herausgearbeitet werden, etwa durch Fräsen bzw. Stechen etc. Ein Übergangsbereich zwischen Gleitkörper und Dichtungsträgerwand kann infolge der "monolithischen" Ausgestaltung frei von Materialgrenzen zwischen unterschiedlichen Materialien bzw. Materialien unterschiedlicher Herstellungsgeschichte sein. Die monolithische Ausgestaltung kann bspw. besonders robust sein.

In bevorzugter Ausgestaltung ist zumindest ein Oberflächenbereich des Gleitkörpers, der die Anlage für den Führungszapfen bildet, mit einer Beschichtung versehen. Wenngleich der Gleitkörper, anders als im Stand der Technik, nicht aus einem gegenüber der Dichtungsträgerwand festeren Material vorgesehen wird, kann sich mit der Beschichtung vorteilhafterweise die mechanische Festigkeit erhöhen lassen.

Bei einer bevorzugten Ausführungsform ist eine Innenwandfläche der Dichtungsträgerwand zumindest in einem Bereich um den Gleitkörper mit einer Beschichtung versehen, was die Festigkeit bzw. Belastbarkeit in diesem mechanisch beanspruchten Bereich erhöhen helfen kann. Die Innenwandfläche begrenzt die Aufnahme axial. Bevorzugt sind der Gleitkörper selbst und die Innenwandfläche bereichsweise beschichtet. Etwa im Falle der materialabtragenden Herstellung kann der Gleitkörper mit einer Hohlkehle in die Innenwandfläche übergehen, diese ist dann bevorzugt beschichtet.

Als Beschichtung ist in bevorzugter Ausgestaltung eine hochwarmfeste Nickellegierung vorgesehen. Dem Nickel kann bspw. Kupfer zulegiert sei.

In bevorzugter Ausgestaltung umgreift der erste Führungszapfen gemeinsam mit einem zweiten Führungszapfen den Gleitkörper bezogen auf die Umlaufrichtung. Der Gleitkörper ist also umlaufend zwischen den Führungszapfen gehalten (aber gleichwohl noch ein Stück weit radial versetzbar), weswegen diese Anordnung auch als *Tang* ("Zange") bezeichnet wird. Die beiden Führungszapfen finden an umlaufend aneinander entgegengesetzten Seitenflächen des Gleitkörpers ihre jeweilige Anlage, diese Anordnung stellt eine Speichenzentrierung dar.

Erfindungsgemäß bildet die Dichtungsträgerwand mit einer weiteren Dichtungsträgerwand in einem Axialschnitt betrachtet ein U-Profil. Die Dichtungsträgerwände, die auch als Schottwände bezeichnet werden, haben ihre Flächenerstreckung radial und in Umlaufrichtung, axial wird ihre jeweilige Dicke genommen. Bevorzugt liegen die Dichtungsträgerwände parallel zueinander und jeweils senkrecht zur Längsachse (bezogen auf ihre Flächenerstreckung).

In bevorzugter Ausgestaltung ist der Gleitkörper mit beiden Dichtungsträgerwänden einstückig ausgebildet, bevorzugt jeweils monolithisch. Dies ist aber im Allgemeinen nicht zwingend erforderlich, der Gleitkörper könnte auch nur einstückig mit einer der Dichtungsträgerwände vorgesehen sein, die andere Dichtungsträgerwand könnte dann bspw. als Blech ausgeführt sein. Die bevorzugt mit beiden Dichtungsträgerwänden einstückige/monolithische Bauform kann bspw. bei einer materialabtragenden Herstellung von einer Scheibe ausgehend erhalten werden, indem von radial außen, vom Scheibenrand her ein axial mittiger Bereich abgetragen werden, womit die Aufnahme entsteht und die Dichtungsträgerwände verbleiben. Dabei bleibt auch der Gleitkörper stehen, wird also in dem entsprechenden Bereich kein Material abgetragen.

In bevorzugter Ausgestaltung erstreckt sich der Gleitkörper nach radial innen bis zu dem Profilgrund des U-Profils, vergleiche auch die vorstehenden Anmerkungen. Ein entsprechend langgestreckter Gleitkörper kann auch hinsichtlich der mechanischen Beanspruchung vorteilhaft sein, weil eine von den bzw. den Führungszapfen aufgebrachte Kraft auf eine größere Fläche verteilt einen geringeren Druck und damit eine geringere Beanspruchung bedeutet.

Bei einer bevorzugten Ausführungsform durchsetzt ein Niet die beiden Wände und den Gleitkörper. An einer der Aufnahme abgewandten Außenwandfläche zumindest einer der beiden Dichtungsträgerwände hält der Niet eine Dichtung, bevorzugt an beiden Dichtungsträgerwänden (jeweils an der Außenwandfläche). Der Niet dient also der Dichtungsbefestigung, nicht zur Befestigung des Gleitkörpers, weswegen sich auch die eingangs beschriebene Spaltproblematik nicht bzw. zumindest nicht in diesem Ausmaß stellt.

In bevorzugter Ausgestaltung ist die Dichtung eine Fischmauldichtung. Diese kann insbesondere von S- bzw. L-förmigen Blechteilen gebildet werden, die sich mit einer zumindest anteilig axialen Erstreckung von der jeweiligen Außenwandfläche der entsprechenden Dichtungsträgerwand weg erstrecken. Die Fischmauldichtungen können dann mit Axialflanschen der vor- bzw. nachgelagerten Laufschaufelanordnungen einen radialen Überlapp haben.

Bei einer bevorzugten Ausführungsform trägt der Dichtungsträger radial innen ein Dichtungselement, bevorzugt eine Honigwabendichtung. Die Anordnung aus Dichtungsträgerring, Fischmauldichtung und Speichenzentrierung mittels Gleitkörper wird auch als *Static Inner Air Seal* (SIAS) bezeichnet.

Die Erfindung betrifft auch einen Verdichter mit einem vorliegend offenbarten Modul. Ferner betrifft die Erfindung auch eine Strömungsmaschine mit einem entsprechendem Verdichter bzw. einem vorliegend beschriebenen Modul.

### Kurze Beschreibung der Zeichnungen

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: ein Strahltriebwerk in einem Axialschnitt;
- Figur 2: als Teil einer Verdichterstufe eine Leitschaufelanordnung mit einer Aufhängung an einem Dichtungsträger, wiederum in einem Axialschnitt;
- Figur 3a: in einer geschnittenen Axialansicht einen Gleitkörper nach dem Stand der Technik als Teil der Aufhängung gemäß Figur 1;
- Figur 3b: in einer geschnittenen Axialansicht einen erfindungsgemäßen Gleitkörper als Teil der Aufhängung gemäß Figur 2.

### Bevorzugte Ausführung der Erfindung

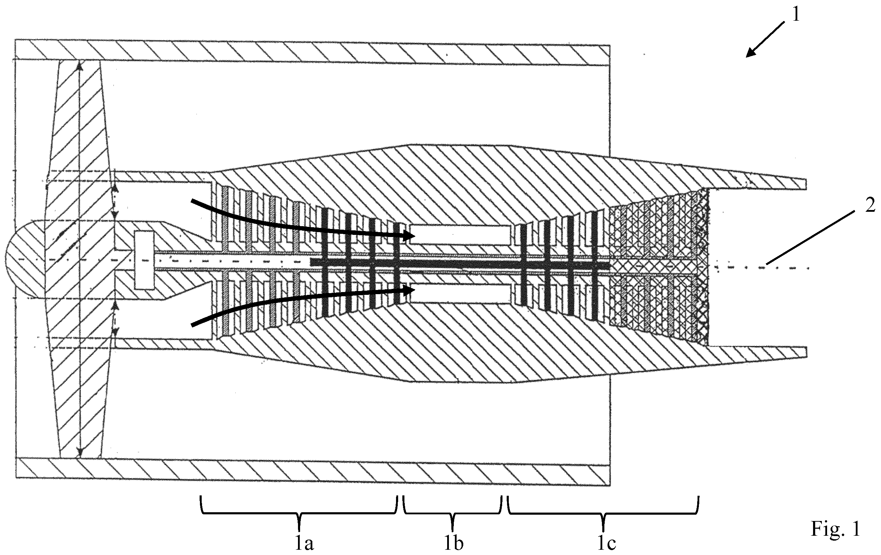

**Figur 1** zeigt eine Strömungsmaschine 1 in schematischer Ansicht, konkret ein Strahltriebwerk. Die Strömungsmaschine 1 gliedert sich funktional in Verdichter 1a, Brennkammer 1b und Turbine 1c. Dabei sind sowohl der Verdichter 1a als auch die Turbine 1c jeweils aus mehreren Stufen aufgebaut, jede Stufe setzt sich aus einem Leit- und einem Laufschaufelkranz zusammen. Im Falle der Turbine 1c ist der Laufschaufelkranz jeweils stromab des zugeordneten Leitschaufelkranzes angeordnet. Im Betrieb rotieren die Laufschaufeln um die Längsachse 2.

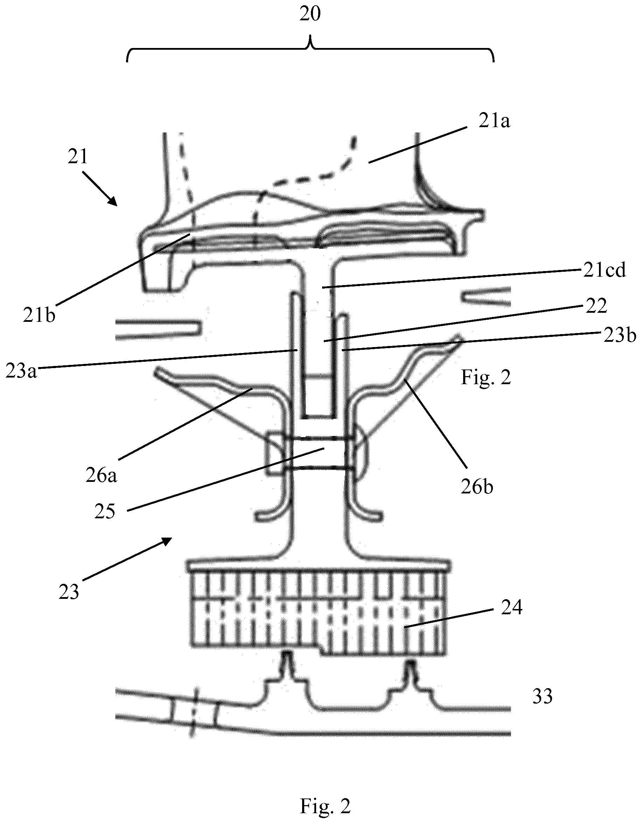

**Figur 2** zeigt als Modul 20 einen Ausschnitt des Verdichters 1c, wiederum in einem Axialschnitt. Konkret ist eine Leitschaufelanordnung 21 mit einer Leitschaufel 21a, einer Innenplattform 21b, sowie einem ersten und einem zweiten Führungszapfen 21c,d zu erkennen. Die Leitschaufel 21a ist radial außen an der Innenplattform 21b angeordnet, die Führungszapfen 21c,d radial innerhalb. Die Führungszapfen 21c,d erstrecken sich nach radial innen in eine Aufnahme 22 hinein, die der Dichtungsträger 23 bildet. Konkret wird die Aufnahme 22 axial zwischen einer vorderen Wand 23a und einer hinteren Wand 23b des Dichtungsträgers 23 begrenzt; die beiden Wände 23a,b des Dichtungsträgers 23 bilden in dem Axialschnitt ein nach radial außen offenes U-Profil. Radial innen trägt der Dichtungsträger 23 ein Dichtungselement 24, nämlich eine Honigwabendichtung.

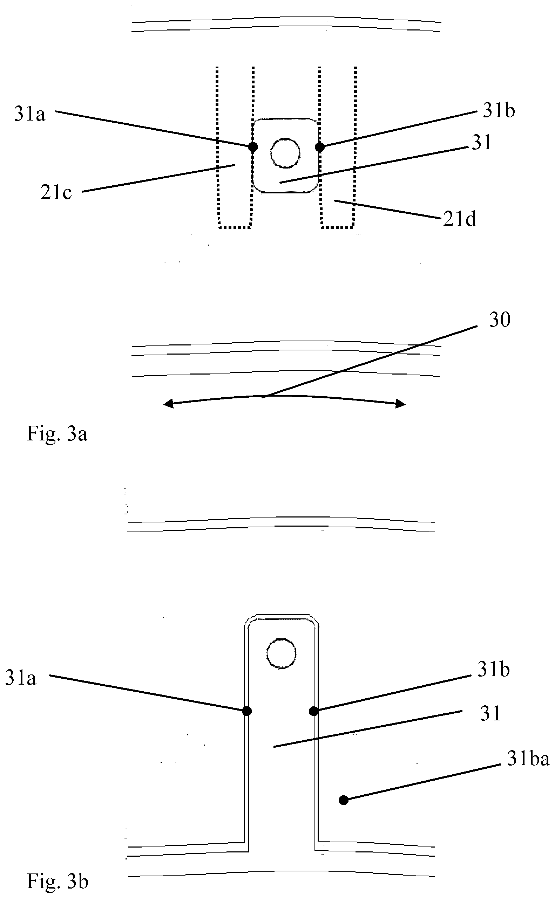

Die Führungszapfen 21c,d sind zwischen den Wänden 23a,b axial in Position gehalten, dabei aber noch radial versetzbar, also nicht geklemmt. Im Detail liegt die Schnittebene des Axialschnitts gemäß Figur 2 umlaufend zwischen den beiden Führungszapfen 21c,d. Im Folgenden wird deshalb ergänzend auch auf Figur 3a verwiesen, aus der ersichtlich ist, wie die Führungszapfen 21c,d (strichliert angedeutet) bezogen auf eine Umlaufrichtung 30 gemeinsam einen Gleitkörper 31 umschließen. Der erste Führungszapfen 21c hat an einer umlaufseitigen Seitenfläche 31a des Gleitkörpers 31 eine Anlage, der zweite Führungszapfen 21d an der umlaufend entgegengesetzten Seitenfläche 31b. Diese auch als *Tang* bezeichnete Anordnung bildet die sogenannte Speichenzentrierung, die noch einen gewissen Radialversatz erlaubt (zum Ausgleich unterschiedlich großer thermisch induzierter Ausdehnungen im Betrieb). Nach radial außen laufen die Führungszapfen 21c,d gewissermaßen gabelförmig zusammen, was in dem Schnitt gemäß Figur 2 zu erkennen ist.

Figur 3a zeigt eine geschnittene Axialansicht, die Schnittebene liegt senkrecht zur Längsachse 2 und teilt die Aufnahme 22 mittig. Die vordere Wand 23a liegt außerhalb der Zeichenebene, der Blick fällt auf die hintere Wand 23b des Dichtungsträgers 23. Figur 3a zeigt eine Variante nach dem Stand der Technik, bei welcher der Gleitkörper 31 mit den Wänden 23a,b des Dichtungsträgers 23 mehrstückig ist und durch einen (in Figur 3a nicht gezeigten) Niet befestigt wird.

**Figur 3b** zeigt einen erfindungsgemäßen Gleitkörper 31, der einstückig mit den Wänden 23a,b des Dichtungsträgers 23 ausgebildet ist. Konkret geht der Gleitkörper 31 monolithisch in beide Wände 23a,b über, die Herstellung erfolgt vorliegend materialabtragend. Dazu wird von einer Scheibe ausgehend die Aufnahme 22 von radial außen, also in Figur 3b von oben eingebracht, etwa durch Fräsen bzw. Stechen. Dabei bleibt der Gleitkörper 31 stehen.

Die Führungszapfen 21c,d sind in Figur 3b der Übersichtlichkeit halber nicht dargestellt, umgreifen den Gleitkörper 31 aber analog der Figur 3a. Aufgrund des zum Profilgrund 23c hin langgestreckten Gleitkörpers 31 ist die Anlagefläche zwischen den Führungszapfen 21c,d und dem Gleitkörper 31 größer, was die mechanische Beanspruchung verringert. Zudem ist zur mechanischen Verstärkung eine Innenwandfläche 23ba um den Gleitkörper 31 und sind auch die Seitenflächen 31a,b des Gleitkörpers 31 selbst mit einer hochwarmfesten Nickellegierung beschichtet.

Aufgrund der einstückigen bzw. monolithischen Ausgestaltung muss der Gleitkörper 31 nicht mit einem Niet befestigt werden, was in der vorliegenden Konstellation einen mit einer hohen Vorspannung belasteten Niet ergeben würde. Nach dem Stand der Technik ist nämlich ein gewisser Axialspalt zwischen dem Gleitkörper 31 und den Wänden 23a,b erforderlich, vgl. auch die Anmerkungen in der Beschreibungseinleitung im Detail. Die erfindungsgemäße Ausgestaltung kann die Lebensdauer bzw. Zuverlässigkeit betreffend Vorteile haben.

Wie aus einer Zusammenschau der Figuren 2 und 3b ersichtlich, durchsetzt den Gleitkörper 31 bevorzugt gleichwohl ein Niet 25, der nämlich an den beiden Wänden 23a,b jeweils eine Fischmauldichtung 26a,b hält. Der Niet 25 ist aufgrund des mit den Wänden 23a,b einstückigen Gleitkörpers 31 jedoch deutlich weniger beansprucht.

**BEZUGSZEICHENLISTE**

| | |
|---|---|
| Strömungsmaschine | 1 |
| Verdichter | 1a |
| Brennkammer | 1b |
| Turbine | 1c |
| Längsachse | 2 |
| Modul | 20 |
| Leitschaufelanordnung | 21 |
| Leitschaufel | 21a |
| Innenplattform | 21b |
| Erster Führungszapfen | 21c |
| Zweiter Führungszapfen | 21d |
| Aufnahme | 22 |
| Dichtungsträger | 23 |
| Vordere Wand | 23a |
| Hintere Wand | 23b |
| Innenwandfläche | 23ba |
| Dichtungselement | 24 |
| Niet | 25 |
| Fischmauldichtung | 26a,b |
| Umlaufrichtung | 30 |
| Gleitkörper | 31 |
| Seitenflächen | 31a,b |

## Patentansprüche

1. Modul (20) für eine Strömungsmaschine (1), mit
einer Leitschaufelanordnung (21) und
einem Dichtungsträger (23),
wobei die Leitschaufelanordnung (21) eine Leitschaufel (21a), eine Innenplattform (21b) und einen ersten Führungszapfen aufweist, wobei, jeweils bezogen auf eine Längsachse (2) des Moduls (20), die Leitschaufel (21a) radial außen an der Innenplattform (21b) und der erste Führungszapfen (21c) radial innen an der Innenplattform (21b) angeordnet ist,
und wobei der Dichtungsträger (23) radial innerhalb der Innenplattform (21b) angeordnet ist und eine nach radial außen offene Aufnahme (22) bildet, in welcher der erste Führungszapfen (21c) der Leitschaufelanordnung (21) angeordnet ist,
und wobei in der Aufnahme (22) ein Gleitkörper (31) angeordnet ist, an welchem der erste Führungszapfen (21c) der Leitschaufelanordnung (21) bezogen auf einen Umlauf um die Längsachse (2) des Moduls (20) eine Anlage findet und in dieser Anlage radial versetzbar geführt ist,
wobei der Gleitkörper (31) einstückig mit einer Wand (23a,b) des Dichtungsträgers (23) ausgebildet ist, welche die Aufnahme (22) axial begrenzt, **dadurch gekennzeichnet, dass** die Wand (23a,b) des Dichtungsträgers (23) gemeinsam mit einer weiteren Wand (23a,b) des Dichtungsträgers (23) in einem Axialschnitt betrachtet U-profilförmig die Aufnahme (22) bildet.

2. Modul (20) nach Anspruch 1, bei welchem der Gleitkörper (31) monolithisch mit der die Aufnahme (22) des Dichtungsträgers (23) axial begrenzenden Wand (23a,b) ausgebildet ist.

3. Modul (20) nach Anspruch 1 oder 2, bei welchem zumindest ein die Anlage für den ersten Führungszapfen (21c) der Leitschaufelanordnung (21) bildender Oberflächenbereich des Gleitkörpers (31) mit einer Beschichtung versehen ist.

4. Modul (20) nach einem der vorstehenden Ansprüche, bei welchem eine der Aufnahme (22) zugewandte Innenwandfläche (23ba) der Wand (23a,b) des Dichtungsträgers (23) zumindest in einem Bereich um den Gleitkörper (31) mit einer Beschichtung versehen ist.

5. Modul (20) nach Anspruch 3 oder 4, bei welchem eine hochwarmfeste Nickellegierung die Beschichtung bildet.

6. Modul (20) nach einem der vorstehenden Ansprüche, bei welchem radial innen an der Innenplattform (21b) ein zweiter Führungszapfen (21d) angeordnet ist, der gemeinsam mit dem ersten Führungszapfen (21c) in der Aufnahme (22) des Dichtungsträgers (23) angeordnet ist, wobei auch der zweite Führungszapfen (21d) an dem Gleitkörper (31) eine Anlage findet und der Gleitkörper (31) bezogen auf den Umlauf zwischen dem ersten Führungszapfen (21c) und dem zweiten Führungszapfen (21d) angeordnet ist.

7. Modul (20) nach einem der vorstehenden Ansprüche, bei welchem der Gleitkörper (31) auch mit der weiteren Wand (23a,b) des Dichtungsträgers (23) einstückig und ggf. monolithisch ausgebildet ist.

8. Modul (20) nach einem der vorstehenden Ansprüche, bei welchem sich der Gleitkörper (31) nach radial innen bis zu einem Profilgrund des U-Profils erstreckt.

9. Modul (20) nach einem der vorstehenden Ansprüche, bei welchem ein Niet (25) die beiden Wände (23a,b) und den Gleitkörper (31) durchsetzt und dabei an zumindest einer der beiden Wände (23a,b), konkret an deren der Aufnahme (22) abgewandten Außenwandfläche, eine Dichtung hält.

10. Modul (20) nach Anspruch 9, bei welchem die Dichtung eine Fischmauldichtung (26a,b) ist.

11. Modul (20) nach einem der vorstehenden Ansprüche, bei welchem der Dichtungsträger (23) radial innen ein Dichtungselement (24) trägt.

12. Modul (20) nach Anspruch 11, bei welchem das Dichtungselement (24) eine Honigwabendichtung ist.

13. Verdichter (1a) für eine Strömungsmaschine (1), mit einem Modul (20) nach einem der vorstehenden Ansprüche.

14. Strömungsmaschine (1) mit einem Modul (20) nach einem der Ansprüche 1 bis 12 oder einem Verdichter (1a) nach Anspruch 13.

## Claims

1. Module (20) for a turbomachine (1), having a guide vane arrangement (21) and a seal carrier (23), the guide vane arrangement (21) comprising a guide vane (21a), an inner platform (21b) and a first guide pin, the guide vane (21a) being arranged radially on the outside on the inner platform (21b) and the first guide pin (21c) being arranged radially on the inside on the inner platform (21b), in each case with respect to a longitudinal axis (2) of the module (20), and the seal carrier (23) being arranged radially inside the inner platform (21b) and forming a receptacle (22) which is open radially outward and in which the first guide pin (21c) of the guide vane arrangement (21) is arranged, and a sliding body (31) being arranged in the receptacle (22), against which sliding body the first guide pin (21c) of the guide vane arrangement (21) abuts in relation to a rotation about the longitudinal axis (2) of the module (20) and is guided in a radially displaceable manner in this abutment, the sliding body (31) being formed integrally with a wall (23a, b) of the seal carrier (23), which wall axially delimits the receptacle (22), **characterized in that** the wall (23a, b) of the seal carrier (23) forms the receptacle (22) in a U-profile shape, as viewed in an axial cross section, together with another wall (23a, b) of the seal carrier (23).

2. Module (20) according to claim 1, wherein the sliding body (31) is formed monolithically with the wall (23a, b) which axially delimits the receptacle (22) of the seal carrier (23).

3. Module (20) according to either claim 1 or claim 2, wherein at least one surface region of the sliding body (31) that forms the abutment for the first guide pin (21c) of the guide vane arrangement (21) is provided with a coating.

4. Module (20) according to any of the preceding claims, wherein an inner wall surface (23ba) of the wall (23a, b) of the seal carrier (23), which inner wall surface faces the receptacle (22), is provided with a coating at least in one region around the sliding body (31).

5. Module (20) according to either claim 3 or claim 4, wherein a high-temperature nickel alloy forms the coating.

6. Module (20) according to any of the preceding claims, wherein a second guide pin (21d) is arranged radially on the inside on the inner platform (21b) and is arranged together with the first guide pin (21c) in the receptacle (22) of the seal carrier (23), the second guide pin (21d) also abutting the sliding body (31), and the sliding body (31) being arranged, in relation to the rotation, between the first guide pin (21c) and the second guide pin (21d).

7. Module (20) according to any of the preceding claims, wherein the sliding body (31) is also integral and optionally formed monolithically with the further wall (23a, b) of the seal carrier (23).

8. Module (20) according to any of the preceding claims, wherein the sliding body (31) extends radially inward as far as a profile base of the U-profile.

9. Module (20) according to any of the preceding claims, wherein a rivet (25) penetrates the two walls (23a, b) and the sliding body (31) and thereby holds a seal on at least one of the two walls (23a, b), specifically on the outer wall surface thereof which faces away from the receptacle (22).

10. Module (20) according to claim 9, wherein the seal is a fish mouth seal (26a, b).

11. Module (20) according to any of the preceding claims, wherein the seal carrier (23) carries a sealing element (24) radially on the inside.

12. Module (20) according to claim 11, wherein the sealing element (24) is a honeycomb seal.

13. Compressor (1a) for a turbomachine (1), having a module (20) according to any of the preceding claims.

14. Turbomachine (1) having a module (20) according to any of claims 1 to 12 or a compressor (1a) according to claim 13.

## Revendications

1. Module (20) pour une turbomachine (1), comportant
un agencement d'aubes directrices (21), et
un support de joint d'étanchéité (23),
l'agencement d'aubes directrices (21) comportant une aube directrice (21a), une plate-forme intérieure (21b) et une première broche de guidage, **caractérisé en ce que**, dans chaque cas par rapport à un axe longitudinal (2) du module (20), l'aube directrice (21a) est disposée radialement à l'extérieur au niveau de la plate-forme intérieure (21b) et la première broche de guidage (21c) est disposée radialement à l'intérieur au niveau de la plate-forme intérieure (21b), et
le support de joint d'étanchéité (23) étant disposé radialement à l'intérieur de la plate-forme intérieure (21b) et formant un logement (22) ouvert radialement vers l'extérieur et dans lequel la première broche de guidage (21c) de l'agencement d'aubes directrices (21) est disposée, et
un corps coulissant (31), au niveau duquel la première broche de guidage (21c) de l'agencement d'aubes directrices (21) prend appui par rapport à une rotation autour de l'axe longitudinal (2) du module (20) et est guidé dans ledit appui de manière à pouvoir se déplacer radialement, étant disposé dans le logement (22),
le corps coulissant (31) étant réalisé d'un seul tenant avec une paroi (23a, b) du support de joint d'étanchéité (23) qui délimite axialement le logement (22),
**caractérisé en ce que** la paroi (23a, b) du support de joint d'étanchéité (23) forme conjointement avec une autre paroi (23a, b) du support de joint d'étanchéité (23) le logement (22) en forme de U, vu en coupe axiale.

2. Module (20) selon la revendication 1, dans lequel le corps coulissant (31) est réalisé de manière monolithique avec la paroi (23a, b) délimitant axialement le logement (22) du support de joint d'étanchéité (23).

3. Module (20) selon la revendication 1 ou 2, dans lequel au moins une zone de surface du corps coulissant (31) formant l'appui pour la première broche de guidage (21c) de l'agencement d'aubes directrices (21) est pourvue d'un revêtement.

4. Module (20) selon l'une des revendications précédentes, dans lequel une surface de paroi intérieure (23ba) de la paroi (23a, b) du support de joint d'étanchéité (23) orientée vers le logement (22) est pourvue d'un revêtement au moins dans une zone autour du corps coulissant (31).

5. Module (20) selon la revendication 3 ou 4, dans lequel un alliage de nickel résistant aux hautes températures forme le revêtement.

6. Module (20) selon l'une des revendications précédentes, dans lequel une seconde broche de guidage (21d) est disposée radialement vers l'intérieur au niveau de la plate-forme intérieure (21b), laquelle seconde broche de guidage est disposée conjointement avec la première broche de guidage (21c) dans le logement (22) du support de joint d'étanchéité (23), la seconde broche de guidage (21d) prenant également appui sur le corps coulissant (31) et le corps coulissant (31) étant disposé entre la première broche de guidage (21c) et la seconde broche de guidage (21d) par rapport à la rotation.

7. Module (20) selon l'une des revendications précédentes, dans lequel le corps coulissant (31) est également réalisé d'un seul tenant avec l'autre paroi (23a, b) du support de joint d'étanchéité (23) et est éventuellement monolithique.

8. Module (20) selon l'une des revendications précédentes, dans lequel le corps coulissant (31) s'étend radialement vers l'intérieur jusqu'à une base du profilé en U.

9. Module (20) selon l'une des revendications précédentes, dans lequel un rivet (25) traverse les deux parois (23a, b) et le corps coulissant (31) et, ce faisant, maintient un joint d'étanchéité sur au moins l'une des deux parois (23a, b), plus précisément sur sa surface de paroi extérieure opposée au logement (22).

10. Module (20) selon la revendication 9, dans lequel le joint d'étanchéité est un joint d'étanchéité de forme trapézoïdale (26a, b).

11. Module (20) selon l'une des revendications précédentes, dans lequel le support de joint d'étanchéité (23) porte un élément d'étanchéité (24) radialement vers l'intérieur.

12. Module (20) selon la revendication 11, dans lequel l'élément d'étanchéité (24) est un joint en nid d'abeille.

13. Compresseur (1a) pour une turbomachine (1), comportant un module (20) selon l'une des revendications précédentes.

14. Turbomachine (1) comportant un module (20) selon l'une des revendications 1 à 12 ou un compresseur (1a) selon la revendication 13.
